Europäisches Patentamt

European Patent Office

Office européen des brevets

(11) Publication number: **0 071 052**
**B1**

(12) **EUROPEAN PATENT SPECIFICATION**

(45) Date of publication of patent specification: **22.01.86**

(51) Int. Cl.⁴: **G 02 B 6/00, F 21 S 5/00**

(21) Application number: **82106050.6**

(22) Date of filing: **07.07.82**

(54) A method and device for dispersing substantially collimated light issuing from a light guide.

(30) Priority: **29.07.81 JP 118666/81**

(43) Date of publication of application:
**09.02.83 Bulletin 83/06**

(45) Publication of the grant of the patent:
**22.01.86 Bulletin 86/04**

(84) Designated Contracting States:
**CH DE FR GB IT LI SE**

(56) References cited:
**FR-A-2 365 814**

**SOVIET INVENTIONS ILLUSTRATED, week
E24, issued 28th July 1982, section P8, page
SU-P8, no. H1184 "Optics, Photography,
General"**
**PATENTS ABSTRACTS OF JAPAN, vol. 1, no.
57, 3rd June 1977**
**PATENTS ABSTRACTS OF JAPAN, vol. 1, no.
145, 25th November 1977, page 7250E77**
**PATENTS ABSTRACTS OF JAPAN, vol. 5, no.
77 (P-62) (749), 21st May 1981**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Hoeger, Stellrecht & Partner**
**Uhlandstrasse 14c**
**D-7000 Stuttgart 1 (DE)**

Courier Press, Leamington Spa, England.

## Description

The present invention relates to the art of illuminating an aerial or aqueous space by using especially, but not exclusively, solar radiation as a source of light energy and by using a light guide to conduct that light energy. More particularly, this invention relates to a method and device for dispersing substantially collimated light issuing from a light guide.

The use of visible light energy from solar radiation for interior lighting purposes has been proposed and various lighting systems utilizing solar radiation have been contemplated. Such lighting systems generally comprise a solar beam receiver for collecting and concentrating solar radiation and an optical conductor for conducting light energy from the receiver to the area to be illuminated. Lighting systems utilizing solar radiation as a source of light energy have acquired considerable industrial applicability because of the development of high quality optical fiber cables. The optical fiber bundle now available on the market is not only able to transmit light energy at an extremely low transmission loss, but has sufficient flexibility to enable light to be conducted along a curved complex optical path provided between the light source and the area to be illuminated. An optical fiber cable or bundle generally comprises a plurality of individual optical fibers, each consisting of a central core glass and a surrounding cladding. During transmission through the core glass, light having an angle of incidence smaller than the critical angle of incidence of the core-forming glass is not totally reflected by the interface or boundary defined between the core and cladding and, therefore, penetrates wholly or partially therethrough toward the cladding to leak out of the optical fiber. Thus, only that light having an angle of incidence larger than the critical angle of incidence of the core material is totally reflected by the boundary and, on repeated reflection, transmitted throughout the fiber. As a result, the cone angle defined by the light issuing from the exit of the optical fiber is limited. The light allowed to issue out of the end of the optical fiber cable is collimated to a considerable degree and illumination takes place only in a spotlight-like fashion. Normally, the cone angle of light issuing from an optical fiber cable does not exceed about 48° for an optical fiber cable having a numerical aperture (NA) value of about 0.4.

JP—A—5624305 discloses a lighting device of the above mentioned type in which the light issuing from the light guide is dispersed by a lens.

It has also been proposed to use solar radiation for underwater lighting purposes. A solar receiver or collector is provided on the sea or water surface and an optical fiber cable is extended therefrom to the bottom of the water. The visible or nonvisible light energy conducted through the fiber cable can be used to illuminate underwater areas, for gathering fish or raising plant planktons or edible sea vegetables. When lighting an aerial space with optical fiber cable, there is a substantial refraction at the exit of the cable due to the difference between the indices of refraction of the two adjacent mediums, i.e., the core glass, which has a high index of refraction, and the air, which has a low index of refraction. However, when lighting an aqueous space with optical fiber cable, the core glass of the cable is obliged to contact the water. The index of refraction of water is lower than that of the core glass but higher than that of air. There is thus even less of a difference between the index of refraction of the core glass and water, so the cone angle of issuing light becomes smaller, even less than 48°.

The object of the present invention is to provide a method and a device for dispersing substantially collimated light issuing from a light guide. Throughout the specification and the appended claims, the term "substantially collimated light" is intended to include not only parallel beams but also those light rays which intersect each other at an angle not larger than, for example, 45°.

In one aspect, the present invention provides a method for dispersing substantially collimated light issuing from a light guide so as to illuminate the surrounding medium with the dispersed light, which method is characterised by introducing the light issuing from the light guide into a light defocusing rod through at least one end thereof, said light defocusing rod being made from a rigid transparent material and defined by a cylindrical peripheral surface and a pair of opposite end surfaces perpendicular to the longitudinal axis of the rod, said light defocusing rod having a parabolic gradient of refractive index which increases from the longitudinal axis toward the circumferential periphery thereof so that the light introduced into said light defocusing rod is refracted at least in part toward said circumferential periphery to issue outwardly therefrom.

Light defocusing rods per se are known in the field of geometrical optics. However, in the prior art there is no teaching that suggests their use for lighting. Use of light defocusing rods make it possible to disperse collimated light in a simple manner even in an aqueous medium.

In another aspect, the present invention provides an optical device for dispersing substantially collimated light issuing from a light guide so as to illuminate the surrounding medium with the dispersed light, which device is characterised by a light defocusing rod made from a rigid transparent material and defined by a cylindrical peripheral surface and a pair of opposite end surfaces perpendicular to the longitudinal axis of the rod, said light defocusing rod having a parabolic gradient of refractive index which increases from the longitudinal axis toward the circumferential periphery thereof so that the light introduced longitudinally into said light defocusing rod through one of said end surfaces is refracted at least in part toward said circumferential periphery to issue outwardly therefrom, the other of said end surfaces being provided with a reflecting surface for reflecting outwardly and backwardly light arriving at said other end surface.

The reflecting surface may be convex toward the inside of the light defocusing rod. Alternatively, it may be convex toward the outside of the light defocusing rod. When the reflecting surface is convex toward the outside of the light defocusing rod, it is preferable to provde a second reflecting surface on the cylindrical peripheral surface of the rod adjacent to the other end surface so that light rays reflected by the first-mentioned reflecting surface are further reflected and dispersed by the second reflecting surface.

Figure 1 is a schematic side elevational view of the light defocusing rod showing the method according to the invention;

Fig. 2 is a graph showing the distribution of refractive index of the light defocusing rod; and

Figs. 3 through 5 are schematic cross-sectional views, partly cut away, of various embodiments of the light defocusing rod.

Description of the Preferred Embodiments

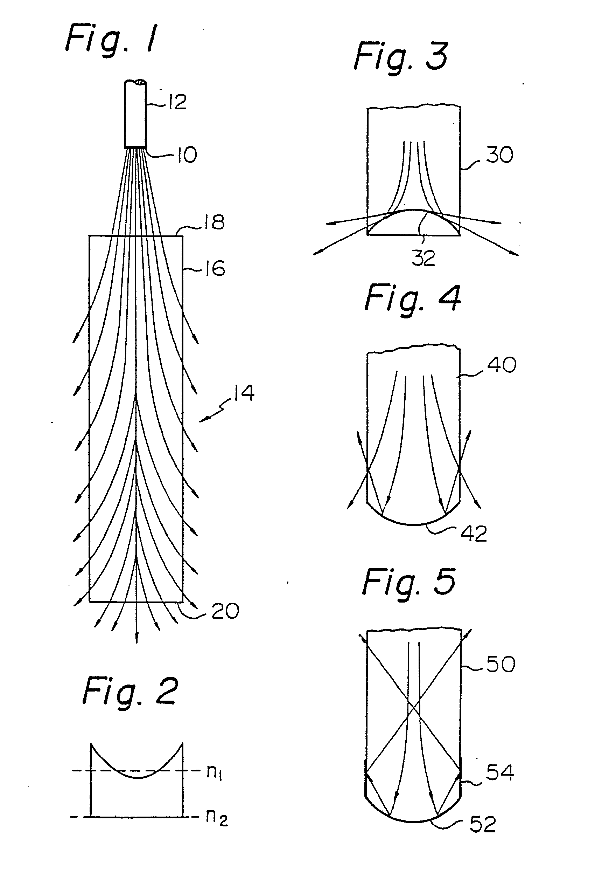

Referring to Fig. 1, optical fiber cable 12 is aligned with light defocusing rod 14 so that light emitting end 10 directly faces the rod. The light receptive end (not shown) of optical fiber cable 12 is optically connected to a light source, such as a sunlight receiver or collector (not shown) so that visible and non-visible light is introduced into the optical fiber cable and conducted therethrough in a substantially collimated fashion.

Light defocusing rod 14 is defined by a cylindrical peripheral surface 16 and a pair of opposite end surfaces 18 and 20 perpendicular thereto. As shown in Fig. 2, light defocusing rod 14 has a parabolic gradient of refractive index which increases from the longitudinal axis toward the cylindrical periphery thereof. As shown in Fig. 2, the refractive index at the center of light defocusing rod 14 is lower than refractive index $n_1$ of water but higher than refractive index $n_2$ of air and gradually increases toward the periphery of the rod along a parabolic curve. Such light defocusing rods with parabolic gradients of refractive index may be prepared by the two-step copolymerization of diethylene glycol bis (allyl carbonate) with phenyl methacrylate or vinyl benzoate (see Appl. Phys. Lett., 23, 247 (1973); Appl. Opt., 16, 1305 (1977); and, Appl. Opt., 20, June 1, 1981).

According to the method of the invention, the light issuing from optical fiber cable 12 through light emitting end 10 is directed to entrance end 18 of light defocusing rod 14. That light which enters light defocusing rod 14 at an angle with respect to the longitudinal axis of the rod swerves outwardly by refraction and, on doing so, is dispersed away from the longitudinal axis of light defocusing rod 14 to issue roughly uniformly from the outer periphery of the rod, as shown by the arrows in Fig. 1. That light which enters the rod roughly parallely to the longitudinal axis thereof do not undergo so much refraction and issue from lower end surface 20.

Although in the foregoing embodiment, an optical fiber cable is arranged at only one end of light defocusing rod 14, it is also possible to provide another optical fiber cable in front of lower end surface 20 of the rod so that light is introduced into light defocusing rod 14 from two directions.

Figure 3 illustrates a part of a light defocusing rod suitable for use in the method according to the present invention. The lower end surface of light defocusing rod 30 is made concave and is provided with reflective coating 32 so that light arriving thereon is reflected radially outwardly, as shown by the arrows.

Figure 4 shows another embodiment of the light defocusing rod according to the invention. In this embodiment, the lower end surface of light defocusing rod 40 is made convex and is provided with reflective coating 42. Provision of the reflective coating results in that light which would otherwise issue through the lower end surface at small angles being reflected backwardly and outwardly.

Figure 5 shows a modified form of the embodiment of Fig. 4. In this embodiment, light defocusing rod 50 is provided with first reflecting surface 52 on the convex lower end surface and second reflecting surface 54 arranged on the cylindrical periphery of the rod adjacent to first reflecting surface 52. Thus, the light reflected by first reflecting surface 52 is then reflected by second reflecting surface 54 so that it issues from the upper portion of light defocusing rod 50 as shown by the arrows.

**Claims**

1. A method of dispersing substantially collimated light issuing from a light guide so as to illuminate the surrounding medium with the dispersed light, characterised by

introducing the light issuing from the light guide into a light defocusing rod through at least one end thereof,

said light defocusing rod being made from a rigid transparent material and defined by a cylindrical peripheral surface and a pair of opposite end surfaces perpendicular to the longitudinal axis of the rod, said light defocusing rod having a parabolic gradient of refractive index which increases from the longitudinal axis toward the circumferential periphery thereof so that the light introduced into said light defocusing rod is refracted at least in part toward said circumferential periphery to issue outwardly therefrom.

2. An optical device for dispersing substantially collimated light issuing from a light guide so as to illuminate the surrounding medium with the dispersed light, characterised by

a light defocusing rod made from a rigid transparent material and defined by a cylindrical peripheral surface and a pair of opposite end surfaces perpendicular to the longitudinal axis of the rod,

said light defocusing rod having a parabolic gradient of refractive index which increases from the longitudinal axis toward the circumferential periphery thereof so that the light introduced longitudinally into said light defocusing rod through one of said end surfaces is refracted at least in part toward said circumferential periphery to issue outwardly therefrom,

the other of said end surfaces being provided with a reflecting surface for reflecting outwardly and backwardly light arriving at said other end surface.

3. An optical device as claimed in claim 2, wherein said reflecting surface is convex toward the inside of the light defocusing rod.

4. An optical device as claimed in claim 2, wherein said reflecting surface is convex toward the outside of the light defocusing device.

5. An optical device as claimed in claim 4, further comprising a second reflecting surface provided on said cylindrical peripheral surface adjacent to said other end surface for reflecting light coming from said reflecting surface on said other end surface.

## Revendications

1. Procédé de dispersion de lumière à peu près collimatée sortant d'une guide de lumière de manière à illuminer le mileu environnant avec la lumière dispersée, caractérisé en ce qu'il consiste à introduire la lumière sortant du guide de lumière dans une tige de défocalisation de lumière par au moins l'une de ses extrémités, ladite tige de défocalisation de lumière étant faite d'une matière rigide transparente et définie par une surface périphérique cylindrique et deux surfaces d'extrémité opposées perpendiculaires à l'axe longitudinal de la tige, ladite tige de défocalisation de lumière ayant un gradient parabolique d'indice de réfraction qui augmente depuis l'axe longitudinal vers sa périphérie circonférentielle de manière que la lumière introduite dans ladite tige de défocalisation de lumière soit réfractée au moins en partie vers ladite périphérie circonférentielle pour en sortir vers l'extérieur.

2. Dispositif optique de dispersion de lumière à peu près collimatée provenant d'un guide de lumière de manière à illuminer le milieu environnant avec la lumière dispersée, caractérisé en ce qu'il comporte une tige de défocalisation de lumière d'une matière rigide transparente et définie par une surface périphérique cylindrique et deux surfaces d'extrémité opposées perpendiculaires à l'axe longitudinal de la tige, ladite tige de défocalisation de lumière ayant un gradient parabolique d'indice de réfraction qui augmente depuis l'axe longitudinal vers la périphérie circonférentielle de manière que la lumière introduite dans la direction longitudinale dans ladite tige de défocalisation de lumière par l'une desdites surfaces d'extrémité soit réfractée au moins en partie vers ladite périphérie circonférentielle pour en sortir vers l'extérieur, l'autre desdites surfaces d'extrémité étant prévue avec une surface réfléchissante pour réfléchir vers l'extérieur et vers l'arrière la lumière qui arrive à ladite autre surface d'extrémité.

3. Dispositif optique selon la revendication 2, dans lequel ladite surface réfléchissante est convexe vers l'intérieur de la tige de défocalisation de lumière.

4. Dispositif optique selon la revendication 2, dans lequel ladite surface réfléchissante est convexe vers l'extérieur du dispositif de défocalisation de lumière.

5. Dispositif optique selon la revendication 4, comprenant en outre une seconde surface réfléchissante prévue sur ladite surface périphérique cylindrique près de ladite autre surface d'extrémité pour réfléchir la lumière provenant de ladite surface réfléchissante sur ladite autre surface d'extrémité.

## Patentansprüche

1. Verfahren zur Streuung von im wesentlichen kollimierten Licht, das aus einem Lichtleiter austritt, zum Beleuchten des Mediums in der Umgebung mit dem dispergierten Licht, gekennzeichnet durch Einführen des aus dem Lichtleiter austretenden Lichts in einen das Licht defokusierenden Stab durch mindestens ein Ende desselben, wobei, der das Licht defokusierende Stab aus einem starren, transparenten Material hergestellt und durch eine zylindrische Mantelfläche und zwei zur Längsachse des Stabes senkrechte, einander gegenüberliegende Stirnflächen definiert ist, und wobei der das Licht defokusierende Stab einen parabolischen Gradienten des Brechungsindex besitzt, welcher von der Längsachse in Richtung auf die Mantelfläche desselben zunimmt, so daß das in den das Licht defokusierenden Stab eingeführte Licht, zumindest teilweise, in Richtung auf die Mantelfläche desselben gebrochen wird, um von dort nach außen auszutreten.

2. Optische Vorrichtung zur Streuung von im wesentlichen kollimierten Licht, welches aus einem Lichtleiter austritt, mit dem Ziel, das (den Lichtleiter) umgebende Medium mit dem gestreuten Licht zu beleuchten, gekennzeichnet durch (folgende Merkmale):

Es ist eine das Licht defokusierender Stab vorgesehen, welcher aus einem starren, transparenten Material hergestellt und durch eine zylindrische Mantelfläche und zwei zur Längsachse des Stabes senkrechte, einander gegenüberliegende Stirnflächen definiert ist;

der das Licht defokusierende Stab hat einen parabolischen Gradienten des Brechungsindex, welcher von der Längsachse desselben in Richtung auf seine Mantelfläche zunimmt, so daß das in Längsrichtung durch eine der Stirnflächen in den das Licht defokusierenden Stab eingeführte Licht, zumindest teilweise, in Richtung auf die Mantelfläche gebrochen wird, um nach außen aus dieser auszutreten;

die andere Stirnfläche ist mit einer reflektierenden Oberfläche versehen, um Licht, welches an dieser anderen Stirnfläche eintrifft, nach außen und rückwärts zu reflektieren.

3. Optische Vorrichtung wie sie in Anspruch 2 beansprucht ist, bei der die reflektierende Oberfläche zum Inneren des das Licht defokusierenden Stabes konvex ausgebildet ist.

4. Optische Vorrichtung wie sie in Anspruch 2 beansprucht ist, bei der die reflektierende Oberfläche konvex zur Außenseite der das Licht defokusierenden Vorrichtung ist.

5. Optische Vorrichtung wie sie in Anspruch 4 beansprucht ist, welche außerdem eine zweite reflektierende Oberfläche umfasst, die an der zylindrischen Mantelfläche, angrenzend an die andere Stirnfläche, angeordnet ist, um das Licht, welches von der reflektierenden Oberfläche an der anderen Stirnfläche kommt, zu reflektieren.

*Fig. 1*

*Fig. 2*

*Fig. 3*

*Fig. 4*

*Fig. 5*

.1